# EUROPEAN PATENT SPECIFICATION

(11) **EP 3 195 102 B1**
(45) Date of publication and mention of the grant of the patent: **27.02.2019**
(21) Application number: 15775532.3
(22) Date of filing: 15.09.2015
(51) Int. Cl.: G06F 3/0488

(54) **SIMULATING REAL-TIME RESPONSIVENESS FOR TOUCH DISPLAYS**
SIMULATION DES ECHTZEITANSPRECHENS FÜR BERÜHRUNGSEMPFINDLICHE ANZEIGEN
SIMULATION DE RÉACTIVITÉ EN TEMPS RÉEL POUR AFFICHAGES TACTILES

(30) Priority: 16.09.2014 US 201414487647
(43) Date of publication of application: 26.07.2017
(73) Proprietor: Microsoft Technology Licensing, LLC, Redmond, WA 98052-6399 (US)
(72) Inventor: PAEK, Timothy S., Redmond, WA 98052-6399 (US)
(74) Representative: CMS Cameron McKenna Nabarro Olswang LLP
(86) International application number: PCT/US2015/050067
(87) International publication number: WO 2016/044194

(56) References cited:
- EP-A1- 2 757 455
- US-A1- 2012 159 393
- US-A1- 2012 304 063
- US-A1- 2013 181 908
- US-A1- 2013 271 487
- US-A1- 2014 198 052
- US-A1- 2014 204 036

## Description

### BACKGROUND

Computing devices that are configured to determine positions of a member (e.g., a finger, a stylus, etc.) relative to a display over time are becoming ubiquitous. For example, mobile telephones, tablet (slate) computing devices, laptop computing devices, large-scale devices (such as those that can be found museums, at conventions, etc.) are currently being manufactured to include touch-sensitive displays. Furthermore, conventional computing devices, such as video game consoles, set top boxes, and televisions, have been configured to identify positions of arms, fingers, head, etc. of a user relative to a display based upon captured (depth and/or RGB) images of the user.

Conventionally, for many of these devices, the position of a member is computed at a relatively low rate. For example, conventional touch controllers included in a touch-sensitive devices operate at sampling rates between 60 and 120 Hz. This sampling rate is not fast enough to keep up with a member that is moving quickly across a display, causing a user to perceive a lag, which may negatively impact the experience of the user. US2014/204036 discloses a touchscreen in which at least one position for display output may be extrapolated based on the touch events for the purpose of smoothing the display output.

### SUMMARY

The following is a brief summary of subject matter that is described in greater detail herein. This summary is not intended to be limiting as to the scope of the claims.

There is provided a computing apparatus according to independent claim 1 and a method according to independent claim 7. A computing apparatus is described herein. The computing apparatus comprises a predictor component that is configured to predict positions of a member relative to a display for a respective plurality of display frames that are to be displayed, the predictor component configured to predict the positions of the member based upon samples of a sensor signal. The computing apparatus further includes an operation component that is configured to cause the plurality of display frames to be displayed on the display based upon the positions of the member predicted by the predictor component.

### BRIEF DESCRIPTION OF THE DRAWINGS

Fig. 1 is an isometric view of a touch-sensitive display with a member moving relatively rapidly thereover.
Fig. 2 illustrates an exemplary system that is configured to track motion of a user over time.
Fig. 3 is a functional block diagram of an exemplary computing apparatus that is configured to simulate real-time detection of position of a member relative to a display.
Fig. 4 is a functional block diagram of an exemplary computing apparatus that is configured to simulate real-time detection of position of a member relative to a display.
Fig. 5 is a functional block diagram of an exemplary predictor component that is configured to predict positions of a member relative to a display for several frames that are to be displayed on the display.
Fig. 6 is a functional block diagram of an exemplary system that is configured to learn the predictor component.
Fig. 7 illustrates an exemplary system that is configured to calibrate the predictor component.
Fig. 8 is a flow diagram that illustrates an exemplary methodology for simulating real-time detection of positions of a member relative to a touch-sensitive display.
Fig. 9 is a flow diagram that illustrates an exemplary methodology for performing a computing operation based upon predicted positions of a member relative to a display.
Fig. 10 is a flow diagram that illustrates an exemplary methodology for learning a computer-implemented model that facilitates predicting positions of a member relative to a display.
Fig. 11 illustrates an exemplary computing apparatus.

### DETAILED DESCRIPTION

Various technologies pertaining to simulating real-time detection of positions of members relative to a display are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something, and is not intended to indicate a preference.

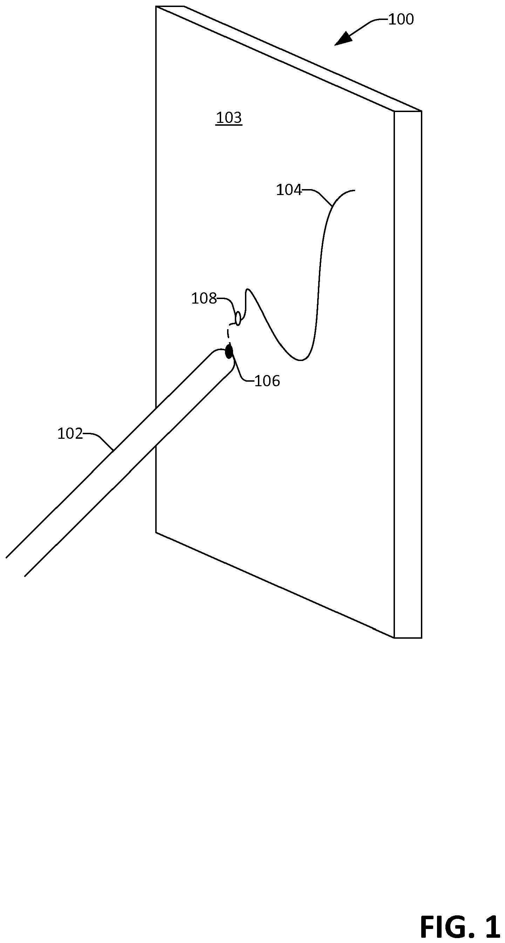

With reference now to Fig. 1, an isometric view of an exemplary touch-sensitive display 100 is illustrated. The touch-sensitive display 100 may be included in a mobile telephone, a tablet (slate) computing device, a laptop computing device, an all-in-one computing device, in a large scale display (as can be found in museums, conventions, and the like), etc. A member 102 is shown as being in contact with a surface 103 the touch-sensitive display 100. The member 102 may be a finger, a stylus, or other suitable mechanism that can be employed to interact with a computing device that includes or is in communication with the touch-sensitive display 100. Additionally, the touch-sensitive display 100 can be configured to detect when the member 102 is hovering over the touch-sensitive display 100. Accordingly, while the examples set forth herein describe the member 102 as being in physical contact with the surface 103 of the touch-sensitive display 100, it is to be understood that the features described herein are applicable to the touch-sensitive display 100 being configured to detect a positon of the member 102 relative to the touch-sensitive display 100 when the member 102 is hovering above the surface 103 of the touch-sensitive display 100.

In the example shown in Fig. 1, the member 102 has moved over the surface 103 of the touch-sensitive display 100 to form a trace 104. A trace can be defined as motion of the member 102 relative to the touch-sensitive display 100 after an initiating event has been detected and prior to a terminating event being detected. In the example shown in Fig. 1, the initiating event is the member 102 contacting the surface 103 of the touch-sensitive display 100, and the terminating event is the member 102 being removed from contacting the surface 103 of the touch-sensitive display 100. The trace 104 is formed by the member 102 moving along the surface 103 of the touch-sensitive display 100 between such events. The trace 104, then, is defined by the (detected) positions on the touch-sensitive display 100 where the member 102 was in contact with the surface 103 of the touch-sensitive display 100 between the initiating event and the terminating event. In the example of hover, the initiating event may be the member 102 coming within some threshold distance from the surface 103 of the display 100, and the terminating event can be when the member 102 is moved away from the surface 103 of the display 100, such that the member 102 is no longer within the threshold distance.

To enhance user experience, it is desirable for the touch-sensitive display 100 to be responsive to input from the user (by way of the member 102) in real-time. For example, it may be desirable for the touch-sensitive display 100 to graphically depict at least portions of the trace 104 on the touch-sensitive display 100 as such portions are being formed (e.g., to indicate to the user what is being detected by the touch-sensitive display 100). This can provide visual feedback to the user as to what positions on the touch-sensitive display 100 have been identified as being included in the trace 104. For example, when a computing apparatus is executing a note-taking application, where a user can form letters, words, etc. via traces, it is desirable to provide visual feedback to indicate to the user that the traces set forth by the user have been correctly interpreted by the computing apparatus. In another example, a messaging application decodes traces to identify words that are to be transmitted to at least one other person. As discussed above, touch controllers in conventional touch-sensitive displays compute position information at a rate that is relatively slow, such that a lag is noticeable when a member is being moved relatively quickly over a surface of a display.

In accordance with aspects described herein, a computing apparatus that comprises the touch-sensitive display 100 is configured to simulate real-time detection of position of the member 102. Accordingly, at least a most recently generated portion of the trace 104 can be displayed on the display 100 in real-time as the member 102 moves across the surface 103 of the display 100. By simulating position detection in real-time, the user can perceive that the touch-sensitive display 100 has real-time responsiveness to input from the user by way of the member 102. For instance, with respect to the note-taking application referenced above, the computing apparatus can provide the user with a handwriting experience that is analogous to the user employing a pen and paper.

As shown in Fig. 1, the user has caused the member 102 to form the trace 104 on the surface 103 of the touch-sensitive display 100, where the member 102 is at a position 106 (e.g., X, Y position) on the surface 103 of the touch-sensitive display 100 when a frame being viewed by the user is shown on the display 100. The touch-sensitive display 100 can include sensors and a touch controller (not shown), where the touch controller receives data output by the sensors and computes the position (e.g., X, Y coordinates) of the member 102 on the surface 103 of the display 100 based upon the data output by the sensors. Due to the relatively low sampling rate of the touch controller, however, when the frame is being shown on the display, the touch controller computes the position of the member 102 to be at position 108. Thus, when the frame is presented for viewing on the display 100, the position of the member 102 reported by the touch controller is "old" - e.g., the member 102 has moved from the computed position 108 in the trace 104 to its actual position 106.

As indicated above, aspects described herein facilitate simulation of positional computation in real-time (e.g., the user perceives the touch-sensitive display to be responsive in real-time or near real-time). In an example, the computing apparatus that comprises the touch-sensitive display can predict positions of the member 102 for several frames that are to be displayed on the touch-sensitive display 100. Further, the computing apparatus can be configured to perform a computing operation based upon at least one predicted position in the predicted positions. Accordingly, when the frame is being presented on the display 100, the position of the member 102 on the surface 103 of the display will have been predicted (accurately) for the frame, such that the user perceives that the display 100 responds in real-time to input set forth by way of the member 102.

In an example, the computing operation may be the display of at least a portion of the trace 104 in real-time. The effect is mitigation of lag associated with conventional touch-sensitive displays (e.g., caused at least partially by the relatively low sampling rate of touch controllers). As will be described in greater detail herein, the computing apparatus can be configured to predict positions of the member 102 relative to the display 100 for each frame in the next n frames that are to be displayed on the display 100, where n is an integer greater than 1. The computing apparatus can be configured to predict such positions based upon most recent data output by sensors, previously received sensor data, most recent (and previous) positions reported by a touch controller, etc.

While the example shown in Fig. 1 has been described with respect to predicting positions of a single member, it is to be understood that aspects described herein support simultaneous prediction of positions of multiple members relative to the surface 103 of the touch-sensitive display 100. That is, when the touch-sensitive display supports multi-touch functionality, a computing apparatus that comprises the touch-sensitive display 100 can be configured to predict touch points for several members that are in contact with the surface 103 of the touch-sensitive display 100.

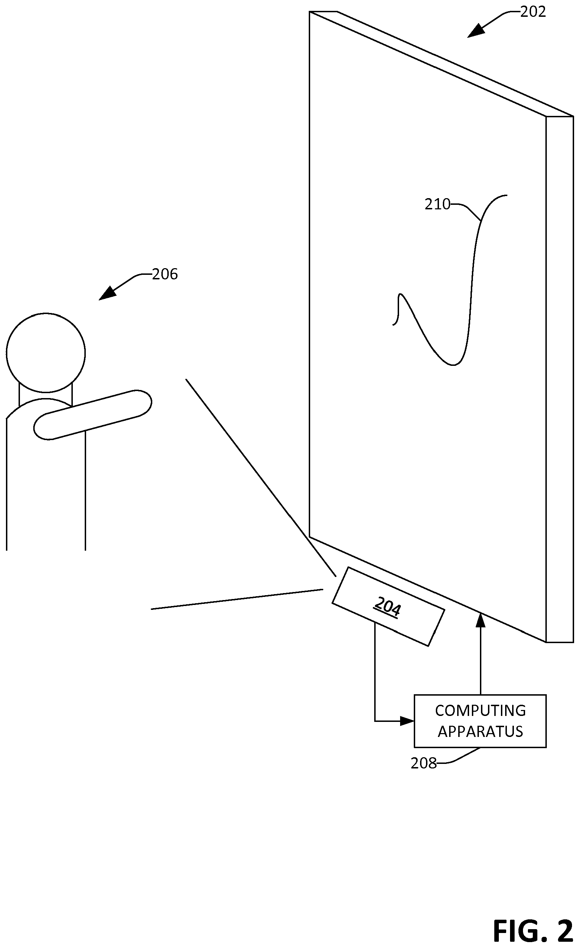

Turning now to Fig. 2, an exemplary system 200 that is configured to simulate real-time detection of position of a member relative to a display is illustrated. The system 200 includes a display 202, which can be a television, a projected screen, etc. For instance, the display 202 may not have touch-sensitive capabilities. The system 200 further includes a sensor 204 that is configured to output data that is indicative of position of at least one member of a user 206 relative to the display 202. In an example, the sensor 204 can be configured to output one or more video streams, one or more depth streams (e.g., a stream of depth images), etc.

The system 200 can further include a computing apparatus 208 that is in communication with the sensor 204 and the display 202. For instance, the sensor 204 may be internal to the computing apparatus 208. Pursuant to an example, the computing apparatus 208 may be a video game console, a set top box, internal to a television, etc. The computing apparatus 208 is configured to receive data output by the sensor 204 and computes position of the at least one member of the user 206 relative to the display 202. In the example shown in Fig. 2, the computing apparatus 208 can be configured to compute a position of a right arm of the user 206 relative to the display 202 as the user 206 moves the right arm.

The user 206 can form a trace 210 by moving the right arm relative to the display 202, wherein the trace 210 is initiated responsive to the computing apparatus 208 detecting an initiating event and the trace 210 is terminated responsive to the computing apparatus 208 detecting a terminating event. Thus, in this example, the computing apparatus 208 monitors movement of the right arm of the user 206 to detect the trace 210. In other examples, the trace 210 can be formed through movement of a head of the user 206, a left arm of the user 206, fingers of the user 206, by way of movement of the eyes of the user 206, etc. The computing apparatus 208 is in communication with the display 202, and can cause data to be presented on the display 202 based upon computed positions of the member of the user 206 relative to the display 202 and predicted positions of the member of the user 206 relative to the display for a plurality of frames to be displayed on the display 202.

In more detail, similar to what is been described above, the sensor 204 is configured to capture, for example, images of the user 206 and output such images to the computing apparatus 208. The computing apparatus 208 is configured to identify position of the member of the user 206 relative to the display 202 based upon the images output by the sensor 204. By the time the computing apparatus 208 receives the images, analyzes the images, and computes the position of the member of the user 206 relative to the display 202, however, the member of the user 206 has moved from such position to a different position. Again, if not accounted for, this can provide the user 206 with the perception of lag (e.g., the user 206 may perceive that the computing apparatus 208 is not immediately responsive to a gesture performed by the user 206).

The computing apparatus 208 is configured to mitigate this lag by predicting positions of the member relative to the display 202 for the next n frames that will be presented on the display 202. Thus, for frame 0 (to be shown at the current time to), the computing apparatus 208 will have predicted the current position (X₀, Y₀) of the member of the user 206 relative to the display. Likewise, for frame 1 (to be displayed immediately subsequent to frame 0 at time to), the computing apparatus 208 will have predicted the position (Xi, Yi) of the member of the user 206 for such frame. Continuing with this example, for frame n (to be displayed on the display 202 at time t*ₙ*), the computing apparatus 208 will have predicted the position (X*ₙ*, Y*ₙ*) of the member of the user 206 for such frame. These predicted positions are updated as frames are displayed, such that real-time detection of position of the member of the user 206 relative to the display is simulated. Similar to what has been described above, the computing apparatus 208 may support simultaneous detection of movement of multiple members, and can further support predicting positions of multiple members for n frames.

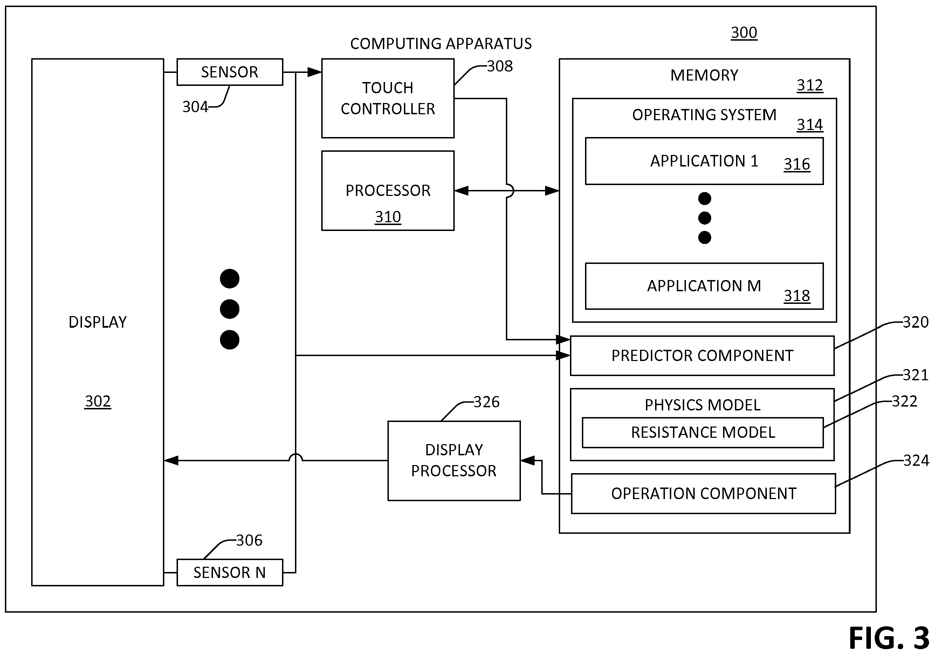

Now referring to Fig. 3, a functional block diagram of an exemplary computing apparatus 300 is illustrated. In an example, the computing apparatus 300 may be a mobile telephone, a tablet (slate) computing device, a laptop computing device, an all-in-one computing device, or any suitable computing device that includes or is in communication with a touch-sensitive display. The computing apparatus 300 includes (or is in communication with) a display 302, which can include any suitable display technologies for presenting data to a user. For example, the display 302 may be or include a liquid crystal display (LCD), a light emitting diode (LED) display, or the like.

The computing apparatus 300 further includes a plurality of sensors 304-306 that are configured to output sensor data that is indicative of whether a member is in contact with an exposed surface of the display 302 and/or whether the member is hovering above the display. Further, the sensor data can be indicative of position of the member relative to the display 302 (e.g., (X, Y) coordinates of the display 302 where the member is in contact with the display 302). The sensors 304-306 may be or include capacitance sensors, resistance sensors, or other suitable sensors, and can be configured to output data that is indicative of a position of the member relative to the display 302 when the member is in contact with the display 302 or hovering above the display 302. For example, the sensors 304-306 may be coupled to conductive lines of a grid, where capacitance between lines in the grid is indicative of whether the member is in contact with the display 302 (or hovering over the display) and is further indicative of position of the member relative to the display 302.

The computing apparatus 300 additionally includes a touch controller 308 that is operably coupled to the sensors 304-306. The touch controller 308 is configured to compute positional data (e.g., (X, Y) coordinates) of a member or members in contact with the display 302 or hovering above the display 302 based upon sensor data output by the sensors 304-306. The touch controller 308 can sample sensor signals output by the sensor 304-306 and can compute the positional information at a sampling rate that is less than real-time. For example, the touch controller 308 can have a sampling rate of between 60 Hz and 1000 Hz. In another example, the touch controller 308 may have a sampling rate of between 60 Hz and 240 Hz. In yet another example, the touch controller 308 can have a sampling rate of between 60 Hz and 120 Hz.

The computing apparatus 300 additionally includes a processor 310 and a memory 312, wherein the processor 310 is configured to execute instructions in the memory 312. The memory 312 includes an operating system 314 and a plurality of applications 316-318 that can be executed by the processor 310 on top of the operating system 314. In an example, the operating system 314 and/or at least one of the applications 316-318 can receive the positional information (e.g., (X, Y) coordinates of the member) output by the touch controller 308, and can cause an operation to be performed based upon the positional information reported by the touch controller 308. Exemplary operations that can be performed by the operating system 314 and/or at least one of the applications 316-318 can include causing graphical content to be presented on a display, initiating an application, selection of a graphical button, amongst other operations.

The memory 312 may further include a predictor component 320 that is configured to predict positions of the member relative to the display 302 for a plurality of frames that are to be displayed on the display 302. For example, the predictor component 320 can predict the positions of the member for the next n frames that are to be displayed on the display 302, where n is an integer greater than zero. For instance, the predictor component 320 can determine n based upon a frame rate of the display 302 and/or sampling rate of the touch controller 308. Thus, when a frame is displayed on the display 302, the predictor component 320 will have computed a prediction of the position of the member relative to the display 302 for such frame. This prediction effectively allows the computing apparatus 300 to simulate real-time interaction responsiveness to gestures set forth by the user, such as swipes, multi-finger gestures, taps, etc.

As will be described in greater detail herein, the predictor component 320 can predict the positions for the plurality of frames based upon signals output by the sensors 304-306. In an example, the predictor component 320 can receive the raw data output by at least one sensor in the sensors 304-306 and can predict the positions of the member relative to the display 302 for the plurality of frames based upon the raw sensor data. This raw sensor data can include identity of sensors in the sensors 304-306 that are active, raw (unfiltered) values output by the sensors, a raw image etc. In other examples, the predictor component 320 can predict the positions of the member for the plurality of frames based upon any one or more of the following pertaining to a trace: 1) positional information (e.g., (X, Y) coordinates) reported by the touch controller 308; 2) computed velocity between touch points reported by the touch controller 308; 3) computed acceleration between touch points reported by the touch controller 308; 4) a determination of a type of the member (e.g., finger or stylus); 5) shapes of touch points (e.g., reported by the touch controller 308 or identified through analysis of raw sensor data); 6) detected or computed pressure at one or more touch points; 7) computed orientation of the member relative to a reference axis (e.g., computed based upon a normal axis of an elliptical touch point); 8) computed elliptical height and width of touch points; 9) proximities of most recently reported touch points relative to edges of the display 302; and/or 10) context of the computing apparatus 300 (e.g., identity of an application being utilized by the user of the computing apparatus 300 when the touch points are reported by the touch controller 308. Other data is also contemplated.

In a non-limiting example, the predictor component 320 can access a physics model 321 that models interaction between the member and the display 302. For example, the physics model 321 can model velocity of the member relative to the display 302, changes in direction of the member relative to the display, etc. The predictor component 320, for instance, can sample the physics model 321 based upon previously computed positions of the member relative to the display 302, estimated and/or computed velocity of the member over the display 302 over time, estimated and/or computed trajectory of the member over the display 302 (e.g., over time), raw sensor output, grid features, derivatives thereof, etc.

The physics model 321 may optionally include a resistance model 322 that models physical resistance of the display 302 relative to the member being moved over the surface of the display 302. For example, a first display surface of a first display may be composed of a first material, while a second display surface of a second display may be composed of a second material, where the first material has a different coefficient of friction than the second material. Thus, for instance, the first display surface may provide less physical resistance to the member as the member is moved across the first display surface than the amount of physical resistance provided by the second display surface. The predictor component 320 can utilize, for example, 1) whether the member is a finger or stylus; 2) an amount of pressure applied to the surface of the display 302; 3) a size of the contact region; and 4) velocity and/or acceleration of the member over the surface of the display 302, when accessing the resistance model 322, and can estimate physical resistance between the surface of the display 302 and the member for the plurality of frames to be displayed on the display 302. That is, for each frame in the plurality of frames, the predictor component 320 can compute a respective value that is indicative of physical resistance between the member and the surface of the display 302, and can compute the positions of the member for the frames based upon the computed resistance values. These resistance values are useful for predicting positions, as physical resistance can impact how fast the member will accelerate or decelerate over the surface of the display 302.

The memory 312 can also include an operation component 324 that causes an operation to be performed based upon at least one prediction of position of the member relative to the display 302 computed by the predictor component 320. For example, the operation component 324 can initiate execution of an application at the time that the member of the user actually touches a graphical icon that is representative of the application (rather than at the time the touch controller 308 computes that the member is touching the graphical icon). In yet another example, the computing apparatus 300 can include a display processor 326, and the operation component 324 can be in communication with the display processor 326. The display processor 326 can be configured to cause graphical data to be presented on the display 302 based upon the predicted positions of the member relative to the display 302 for the plurality of frames (e.g., output by the predictor component 320). For instance, the operation component 324 can cause one or more pixels to be assigned a particular color in a frame based upon such pixels being predicted to be at or proximate to position of the member when the frame is to be displayed on the display 302. Accordingly, for instance, if a trace performed by the member over the display 302 is to graphically shown on the display 302 in real-time, the frames presented by the display processor 326 will include pixels that represent predicted positions of the member for such frames. The effect is that, from the perspective of the user, the trace is shown in real-time as it is being created through interaction of the member with the display 302.

Additional detail pertaining to operation of the predictor component 320 is now set forth. As indicated previously, the predictor component 320 can predict the positions of the member relative to the display 302 by sampling the physics model 321 using one or more features and/or signals. For instance, the predictor component 320 can sample the physics model 321 using raw sensor data output by the sensors 304-306. This raw sensor data can be acquired directly from the sensors 304-306 or can be passed through the touch controller 308. The raw sensor data may be useful when predicting positions of the member, as it is unfiltered by the touch controller 308. Further, the predictor component 320 can sample the physics model 321 using positions of the member computed by the touch controller 308 to predict the positions of the member relative to the display 302 for the plurality of frames. As can be ascertained, these previous positions can be indicative of direction of motion of the member, which is useful when predicting positions of the member. The predictor component 320 can also sample the physics model 321 based upon computed velocity and/or acceleration of the member corresponding to previous positions of the member in the trace. These features are also indicative of position of the member for the next *n* frames to be displayed on the display 302. Likewise, the predictor component 320 can sample the physics model based upon shape of the touch point and pressure applied to the display 302 by the member at the touch point. Shape of the touch point and pressure applied at the touch point can be indicative of how quickly the member can travel over the display 302 (when considering resistance between the member and the display 302), as well as direction of movement of the member over the display 302. Such information, in turn, is indicative of positions of the member at the next n frames. For example, a detected change in shape of the touch point can indicate a change in direction of the member over the surface of the display 302.

The predictor component 320 can also consider context when computing predictions of the positions of the member for the frames that are to be displayed. For instance, when the user is employing a note-taking application, the user is unlikely to cause a stylus to transition from the display to a bezel of the computing apparatus 300. Accordingly, an identity of an application being executed by the processor 310, or other context associated with the computing apparatus 300, can be indicative of the movement of the member relative to the display 302. Likewise, computed position of the member and predicted positions of the member relative to the edge of the display 302 can be indicative of the position of the member when a frame is displayed. For instance, when a computed position output by the touch controller 308 indicates that the member is near the border between the display 302 and a bezel, then (at least in some situations) it can be inferred that the user will change direction of the member such that the member stays in contact with a surface of the display 302. In other cases, the computing apparatus 300 may support gestures, where certain functionality is initiated when the member transitions from the display to the bezel of the computing apparatus 300. For example, when the member is swiped in a direction across the display, a new "page" may be presented, a new application may be initiated, etc. The predictor component 320 can infer that such gesture is being made based upon context of the computing apparatus 300, historic use of the computing apparatus 300 by the user, etc., and can predict the positions of the member for the plurality of frames based upon such information. In addition, the predictor component 320 can use linear and nonlinear modeling to fit touch points to facilitate predicting positions of the member relative to the display 302 for the frames that are to be displayed (e.g., the next n frames).

While the touch controller 308, the processor 310, the memory 312, and the display processor 326 are shown as being separate, it to be understood that in an exemplary embodiment, two or more of such elements may be co-embedded on a single chip (e.g., may be included in a System on Chip or Cluster on Chip design).

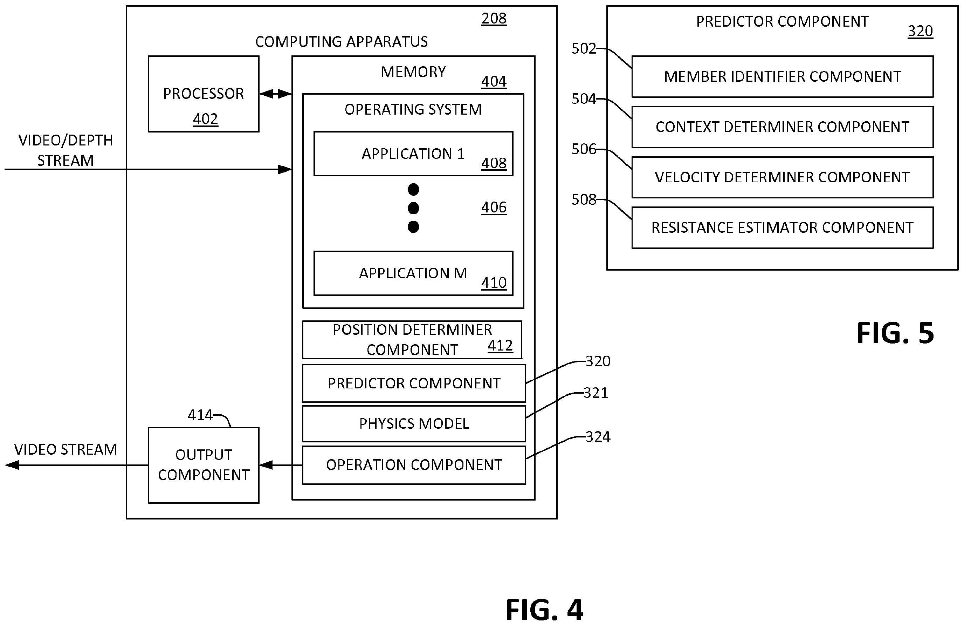

Now referring to Fig. 4, a functional block diagram of the computing apparatus 208 (Fig. 2) is illustrated. The computing apparatus 208 includes a processor 402 and a memory 404. The memory 404 comprises an operating system 406 executed by the processor 402, as well as a plurality of applications 408-410 that are executed by the processor 402 on top of the operating system 406. The memory 404 additionally includes a position determiner component 412 that is configured to receive a video and/or depth stream from a sensor. The position determiner component 412 can analyze contents of the video and/or depth stream and compute positions of a member relative to the sensor, and thus relative to a display, wherein the position determiner component 412 computes the positions based upon the received video and/or depth stream.

The memory 404 further includes the predictor component 320 that is configured to sample the physics model 321 to predict positions of the member relative to the sensor for a plurality of frames that are to be displayed on the display 202 (e.g., the next n frames). The predictor component 320, in this example, can utilize at least some of the information previously described as being utilized by the predictor component 320 to predict positions of the member. The predictor component 320 can additionally use other information when sampling the physics model 321, such as, for example, size of a user captured in the video and/or depth stream, approximate age of the user captured in the video and/or depth stream (e.g., people of certain sizes and ages may, by nature, move arms more rapidly or more slowly than others), etc. The memory 404 also includes the operation component 324, which can cause an operation to be performed based upon the predicted positions of the member for the frames. An output component 414 can generate an output video stream for presentment on the display 202, wherein content of the video stream output by the output component 414 may be a function of the predicted positions of the member for the frames. Again, the effect is to simulate real-time responsiveness from the perspective of the user 206.

Now referring to Fig. 5, a functional block diagram of the predictor component 320 is illustrated. The predictor component 320 can include a member identifier component 502 that can identify a type of member that is interacting with a display, as well as other parameters of such member. For instance, the member identifier component 502 can disambiguate between a finger and a stylus based upon a size of a touch point when the member is in contact with the display, a shape of the touch point when member is in contact with the display, an amount of capacitance detected by a sensor when the member is proximate to or in contact with the display, etc. In some cases, the member can be configured to communicate with the computing apparatus that comprises the display (or is in communication with the display), and the member can transmit a signal that indicates that the member moving over the surface of the computing device is a stylus. Further, the member identifier component 502 can identify parameters corresponding to the member, such as (general) size of the member when in contact with the display, type of material out of which the member is made (which may be inferred based upon observed velocity and acceleration of the member relative to the display), etc.

The predictor component 320 also optionally includes a context determiner component 504 that, when the member is used to interact with content on the display, can determine context of a computing apparatus that includes the predictor component 320. For example, the context determiner component 504 can identify an application being executed by the computing apparatus when the member is in contact with the display, can identify a screen depicted on the display (e.g., a "home" screen), etc.

The predictor component 320 can also include a velocity determiner component 506 that can be configured to compute velocity and/or acceleration of the member over the display at a series of most recently identified touch points (e.g., where the touch points have been identified by a touch controller). The velocity determiner component 506 can also compute direction of movement of the member over the display at a series of most recent touch points.

Further, the predictor component 320 can optionally include a resistance estimator component 508 that can be configured to access the resistance model 322 and estimate physical resistances between the member and the display for the plurality of frames. For example, the resistance model 322 can be configured to model the physical resistance force between the member and the surface of the display for different pressures, member cross-section sizes, velocities, accelerations, etc., and the resistance estimator component 508 can be configured to compute a value that is indicative of such resistance force for at least one frame in the next n frames. Additionally, the resistance model 322 can take into consideration a coefficient of friction of the material of the display. The predictor component 320 can sample the physics model based upon such data.

Therefore, the predictor component 320 can predict the positions of the member for the plurality of frames to be presented on the display based upon a type of the member and parameters of the member identified by the member identifier component 502, context of the computing apparatus identified by the context determiner component 504, velocity, acceleration and/or most recent direction of movement of the member computed by the velocity determiner component 506, and resistance values output by the resistance estimator component 508. The predictor component 320 can continuously predict positions of the member for the next *n* frames, such that uncertainty associated with future frames is updated (reduced) as frames are displayed.

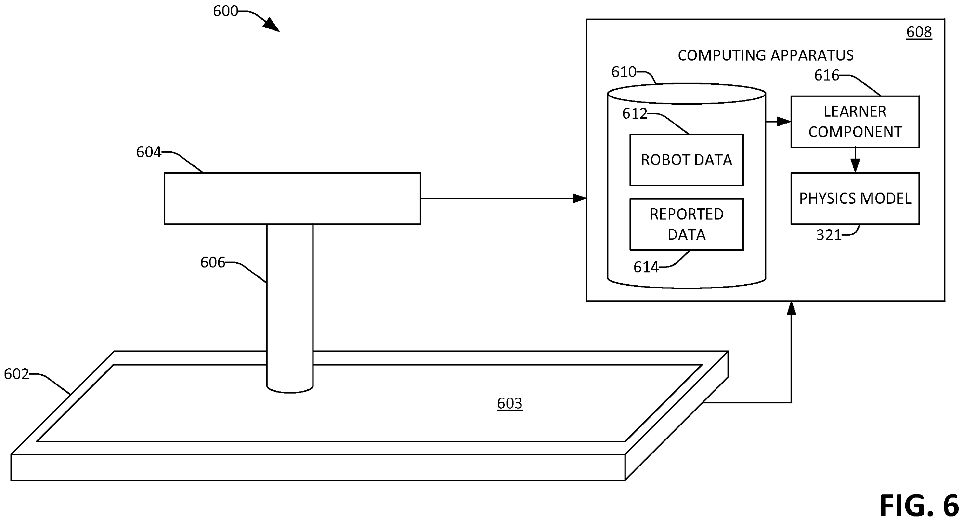

Now referring to Fig. 6, an exemplary system 600 that facilitates constructing the physics model 321 is illustrated. A computing device 602 (e.g., a mobile phone) may have a touch-sensitive display 603. A robotic arm 604 can be positioned relative to the touch-sensitive display 603 and may have a member 606 attached thereto, wherein position, speed, acceleration, angle of contact, etc. of the member 606 can be controlled by the robot arm 604. Further, the robot arm 604 can have sensors thereon that output data that is indicative of known positions, directions of motion, velocities, etc. of the member 606. Accordingly, as the robot arm 604 moves the member 606 over the touch-sensitive display 603 of the computing device 602, the robot arm 604 can generate time-stamped data that is indicative of position, orientation, etc. of the member 606 over time relative to the touch-sensitive display 603.

The robot arm 604 can be programmed to cause the member 606 to perform a variety of traces over the touch-sensitive display 603, mimicking gestures performed by humans on touch-sensitive displays. The member 606 can be constructed to represent a human finger of a particular size, shape, etc. In another example, the member 606 can be constructed to represent a stylus. As the robot arm 604 creates traces with the member 606 over the surface of the touch-sensitive display 603, the robot arm 604 generates data that is indicative of known positions (and velocity, acceleration, direction of travel, etc.) of the member 606 relative to the display 603 over time. Meanwhile, a touch controller of the computing device 602 reports computed positions of the member 606 relative to the display 603.

A computing apparatus 608 can be in communication with the robot arm 604 and the computing device 602, wherein the computing apparatus 608 includes a data store 610. Data reported by the robot (robot data 612) and position data generated by the touch controller (reported data 614) can be included in the data store 610 of the computing apparatus 608. Additionally, the reported data 614 can include raw sensor data output by sensors in the computing device 602. Accordingly, the data store 610 includes actual position data of the member 606 relative to the display (as reported by a robot), position data for the same time periods computed by the touch controller, and raw sensor data used by the touch controller to compute the position data.

A learner component 616 can receive the data in the data store 610 and utilize machine learning techniques to learn the physics model 321. The learner component 616 can construct the physics model 321 such that a relationship between the data reported by the robot arm 604 and the data output by the touch controller of the computing device 602 can be ascertained. At least a portion of the robot data 612 can be the target of learning, and can be used to validate the physics model 321.

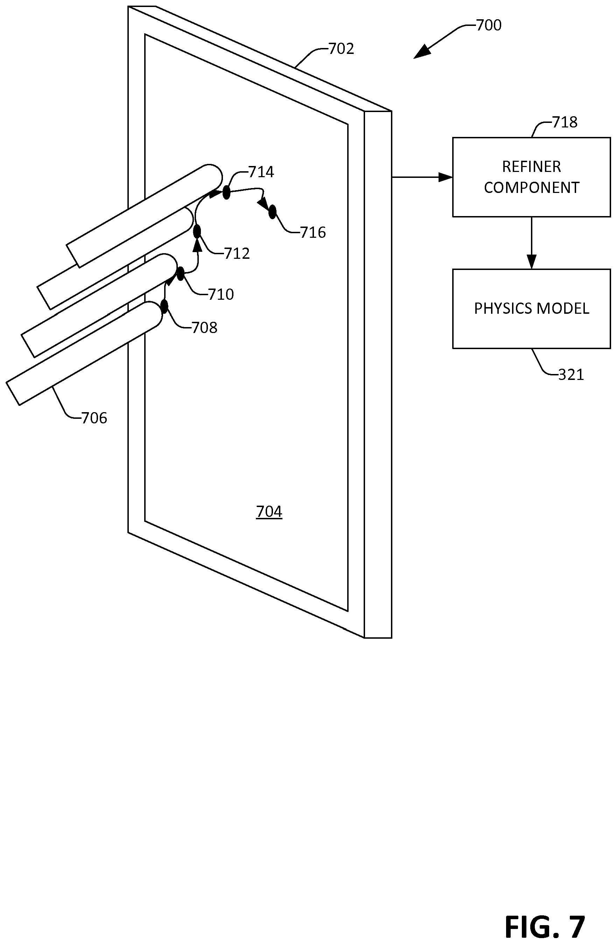

Now referring to Fig. 7, an exemplary system 700 that facilitates calibrating (updating) the physics model 321 is illustrated. A computing device 702 may have a calibration application installed thereon that causes a sequence of graphics to be presented on a display 704 of the computing device 702 - for instance, a user can be instructed to employ a member 706 to follow the graphics 708, 710, 712, 714, and 716 over time, thereby instructing the user to form a trace (e.g., where the graphics 708-716 are presented to cause portions of the trace to have certain velocity, acceleration, position, etc.). A refiner component 718 can observe the member 706 relative to the graphics 708-716 over time, and can update parameters of the physics model 321 based upon observed user interaction with the display 704. For example, the application can request that the user make a certain shape, and the refiner component 718 can observe a trace made when such shape is made by the user through use of the member 706. The refiner component 718 can then update parameters of the predictor component 320 based upon this observed trace.

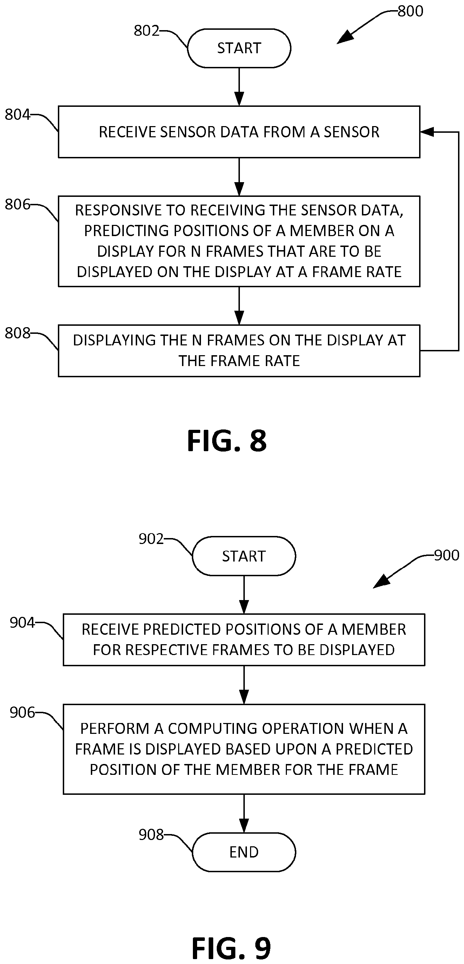

Figs. 8-10 illustrate exemplary methodologies relating to simulating real-time responsiveness of a touch-sensitive display. While the methodologies are shown and described as being a series of acts that are performed in a sequence, it is to be understood and appreciated that the methodologies are not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodologies can be stored in a computer-readable medium, displayed on a display device, and/or the like.

Turning now solely to Fig. 8, an exemplary methodology 800 that facilitates simulating real-time responsiveness of a computing device to input made by way of a touch-sensitive display is illustrated. The methodology 800 starts at 802, and at 804 sensor data is received from a sensor. The sensor data is indicative of position of a member that is in contact with a display of a computing apparatus. At 806, responsive to receiving the sensor data, positions of the member on the display are predicted for *n* frames that are to be displayed on the display at a frame rate, where n is an integer greater than zero and less than 100, and where the positions of the member are predicted based upon the sensor data. At 808, the n frames are displayed on the display at the frame rate. In an example, content of each frame in the n frames can be based upon a respective position in the predicted positions. This allows the user to perceive that the display is responsive in real-time to interaction of the user with the display. The methodology 800 then returns to 804, where the methodology 800 repeats, updating the predicted positions as frames are displayed.

Turning now to Fig. 9, an exemplary methodology 900 for performing a computing operation based upon predicted positions of a member relative to a display is illustrated. The methodology 900 starts at 902, and at 904 predicted positions of a member for respective frames that are to be displayed are received. For example, for a next frame to be displayed (fi), a predicted position of the member may be (Xi, Yi). For the next frame (f₂), the predicted position of the member can be (X₂, Y₂), such that the predicted position of the member for frame *n*(f*ₙ*) is (X*ₙ*, Y*ₙ*).

At 906, a computing operation is performed when a frame is displayed based upon a predicted position of the member for the frame. For instance, when frame f₂ is displayed, the position (X₂, Y₂) of the member (predicted) can be used to initiate an application, to display a portion of a trace, etc. The methodology 900 completes at 908.

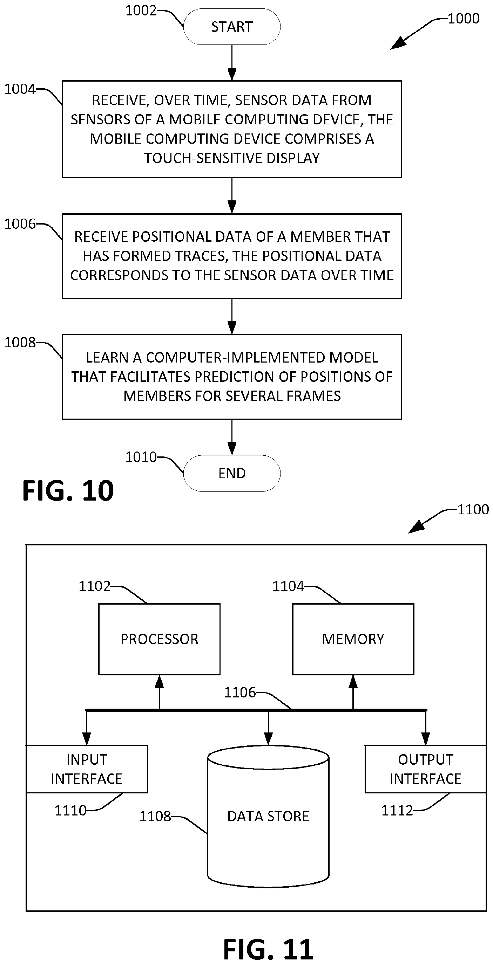

Turning now to Fig. 10, an exemplary methodology 1000 for learning the predictor component 320 is illustrated. The methodology 1000 starts at 1002, and at 1004, over time, sensor data is received from sensors of a mobile computing device that comprises a touch-sensitive display. Such sensor data can be raw sensor data or can be computed positions output by a touch controller. At 1006, positional information of a member is received, wherein such positional information corresponds to the sensor data over time. For example, the positional information of the member can be generated by a robotic arm that controls the member, such that the positional information can be known. At 1008, a computer-implemented model that facilitates prediction of positions of members for the next *n* frames (several frames) is learned based upon the data received at 1004 and 1006. The methodology 1000 completes at 1010.

Various examples are now set forth.
Example 1: A computing apparatus comprising: a predictor component that is configured to predict positions of a member relative to a display for a respective plurality of display frames that are to be displayed, the predictor component configured to predict the positions of the member based upon samples of a sensor signal; and an operation component that is configured to cause the plurality of display frames to be displayed on the display based upon the positions of the member predicted by the predictor component.
Example 2: A computing apparatus according to example 1, further comprising a touch controller that is configured to compute a position of the member relative to the display based upon at least one sample of the sensor signal, the predictor component configured to predict the positions of the member based upon the position computed by the touch controller.
Example 3: A computing apparatus according to any of examples 1-2, the predictor component configured to predict the positions of the member based upon at least one of raw signals output by sensors in the computing apparatus, a value that is indicative of pressure applied to the display by the member, orientation of the member, of features of a capacitive grid of the computing apparatus.
Example 4: The computing apparatus according to any of examples 1-3, the predictor component configured to predict the positions of the member based upon a value that is indicative of a resistance force between the member and a surface of the display.
Example 5: The computing apparatus according to example 4, further comprising a memory that comprises a resistance model, the resistance model configured to model the resistance force between the member and the surface of the display, the predictor component configured to compute the value that is indicative of the resistance force based upon the resistance model.
Example 6: The computing apparatus according to any of examples 1-5, the predictor component configured to predict the positions of the member based upon the member being a stylus rather than a finger.
Example 7: The computing apparatus according to any of examples 1-5, the predictor component configured to predict the positions of the member based upon the member being a finger rather than a stylus.
Example 8: The computing apparatus according to any of examples 1-7, wherein the predictor component selects a number of frames to include in the plurality of frames based upon a frame rate of the display.
Example 9: The computing apparatus according to any of examples 1-8, wherein the operation component is configured to cause the frames to be displayed such that a user of the computing apparatus perceives that position of the member is being detected in real-time.
Example 10: The computing apparatus according to any of examples 1-9, wherein the predictor component is configured to predict the positions of the member relative to the display for the respective plurality of display frames based upon positions of the member relative to the display for previously displayed display frames, an estimated velocity of the member as the member moves over the display, and an estimated resistive force between the member and the display as the member moves over the display.
Example 11: The computing apparatus according to any of examples 1-10, wherein the predictor component is configured to predict the positions based upon at least one of: a position of the member relative to an edge of the display; or an identity of an application being executed by the computing apparatus.
Example 12: The computing apparatus according to any of examples 1-11, wherein the predictor component is configured to predict the positions based upon previously detected positions of the member relative to the display in a trace.
Example 13: A method comprising: receiving sensor data from a sensor, the sensor data being indicative of position of a member on a display, the member being in contact with the display; responsive to receiving the sensor data, predicting positions of the member on the display for *n* frames that are to be displayed on the display at a frame rate, *n* being an integer greater than zero and less than one hundred, the positions of the member predicted based upon the sensor data; and displaying the *n* frames on the display at the frame rate, wherein content of each frame in the *n* frames is based upon a respective position in the positions.
Example 14: The method according to example 13, further comprising: for at least one frame in the *n* frames, estimating a physical resistance force between the member and the display; and predicting a position of the member for at least one other frame in the *n* frames based upon the resistive force estimated between the member and the display.
Example 15: The method according to any of examples 13-14, wherein displaying the *n* frames on the display at the frame rate comprises displaying a trace of the member over the display, wherein the trace, from a perspective of a user, is depicted in real-time on the display.
Example 16: The method according to any of examples 13-15, further comprising: receiving computed coordinates of the member on the display, the computed coordinates based upon the sensor data; and predicting the positions of the member on the display for the n frames based upon the computed coordinates of the member on the display.
Example 17: The method according to example 16, wherein predicting the positions comprises: estimating a trajectory and velocity of the member with respect to a first frame based upon the sensor data from the sensor; and estimating a position of the member for at least one frame in the *n* frames based upon the trajectory and the velocity of the member.
Example 18: The method according to any of examples 13-16, further comprising: detecting that the member is a stylus rather than a finger; and predicting the positions of the stylus on the display for the *n* frames based upon the detecting that the member is the stylus rather than the finger.
Example 19: The method according to any of examples 13-16, further comprising: detecting that the member is a finger rather than a stylus; and predicting the positions of the stylus on the display for the *n* frames based upon the detecting that the member is the finger rather than the stylus.
Example 20: A computing apparatus comprising: a display that is configured to display frames at a frame rate; a sensor that is configured to output a signal that is indicative of a position of a member that is in physical contact with the display; a touch controller that is operably coupled to the sensor, the touch controller is configured to sample the signal and is further configured to output coordinates at a sampling rate based upon samples of the signal, the coordinates indicative of positions of the member on the display when the signal was sampled; a processor that is operably coupled to the touch controller, the processor programmed to: predict positions of the member on the display for several frames that are to be displayed on the display; and perform a computing operation when a frame in the several frames is displayed based upon a predicted position of the member on the display for the frame.
Example 21: A computing system comprising: means for receiving sensor data from a sensor, the sensor data being indicative of position of a member on a display, the member being in contact with the display; means for predicting positions of the member on the display for *n* frames that are to be displayed on the display at a frame rate, *n* being an integer greater than zero and less than one hundred, the positions of the member predicted based upon the sensor data; and means for displaying the *n* frames on the display at the frame rate, wherein content of each frame in the *n* frames is based upon a respective position in the positions.

Referring now to Fig. 11, a high-level illustration of an exemplary computing device 1100 that can be used in accordance with the systems and methodologies disclosed herein is illustrated. For instance, the computing device 1100 may be used in a system that predicts position of a member relative to a display for a plurality of frames that are to be displayed on the display. By way of another example, the computing device 1100 can be used in a system that is configured to learn a predictor component that is configured to predict positions of a member relative to a display for a plurality of frames that are to be displayed on the display. The computing device 1100 includes at least one processor 1102 that executes instructions that are stored in a memory 1104. The instructions may be, for instance, instructions for implementing functionality described as being carried out by one or more components discussed above or instructions for implementing one or more of the methods described above. The processor 1102 may access the memory 1104 by way of a system bus 1106. In addition to storing executable instructions, the memory 1104 may also store frames, predicted positions, sensor data, computed positions (e.g., computed by a touch controller), etc.

The computing device 1100 additionally includes a data store 1108 that is accessible by the processor 1102 by way of the system bus 1106. The data store 1108 may include executable instructions, raw sensor data, etc. The computing device 1100 also includes an input interface 1110 that allows external devices to communicate with the computing device 1100. For instance, the input interface 1110 may be used to receive instructions from an external computer device, from a user, etc. The computing device 1100 also includes an output interface 1112 that interfaces the computing device 1100 with one or more external devices. For example, the computing device 1100 may display text, images, etc. by way of the output interface 1112.

It is contemplated that the external devices that communicate with the computing device 1100 via the input interface 1110 and the output interface 1112 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 1100 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 1100 may be a distributed system. Thus, for instance, several devices may be in communication by way of a network connection and may collectively perform tasks described as being performed by the computing device 1100.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims. Furthermore, to the extent that the term "includes" is used in either the details description or the claims, such term is intended to be inclusive in a manner similar to the term "comprising" as "comprising" is interpreted when employed as a transitional word in a claim.

## Claims

1. A computing apparatus (300) comprising:
a predictor component (320) that is configured to predict positions of a member relative to a display for a respective plurality of display frames that are to be displayed, the predictor component (320) configured to predict the positions of the member based upon samples of a sensor signal and a value that is indicative of a frictional force between the member and a surface of the display; and
an operation component (324) that is configured to cause the plurality of display frames to be displayed on the display based upon the positions of the member predicted by the predictor component (320).

2. The computing apparatus (300) of claim 1, further comprising a touch controller that is configured to compute a position of the member relative to the display based upon at least one sample of the sensor signal, the predictor component (320) configured to predict the positions of the member based upon the position computed by the touch controller.

3. The computing apparatus (300) of claim 1, further comprising a memory that comprises a resistance model, the resistance model configured to model the frictional force between the member and the surface of the display, the predictor component (320) configured to compute the value that is indicative of the frictional force based upon the resistance model.

4. The computing apparatus (300) of claim 1, wherein the operation component is configured to cause the frames to be displayed such that a user of the computing apparatus perceives that position of the member is being detected in real-time.

5. The computing apparatus (300) of claim 1, wherein the predictor component (320) is configured to predict the positions of the member relative to the display for the respective plurality of display frames based upon positions of the member relative to the display for previously displayed display frames, an estimated velocity of the member as the member moves over the display, and an estimated frictional force between the member and the display as the member moves over the display.

6. The computing apparatus (300) of claim 1, wherein the predictor component (320) is configured to predict the positions based upon at least one of:
a position of the member relative to an edge of the display; or
an identity of an application being executed by the computing apparatus.

7. A method (800) comprising:
receiving (804) sensor data from a sensor, the sensor data being indicative of position of a member on a display, the member being in contact with the display;
responsive to receiving the sensor data, predicting (806) positions of the member on the display for *n* frames that are to be displayed on the display at a frame rate, *n* being an integer greater than zero and less than one hundred, the positions of the member predicted based upon the sensor data; and
for at least one frame in the *n* frames, estimating a frictional force between the member and the display; and
predicting a position of the member for at least one other frame in the *n* frames based upon the frictional force estimated between the member and the display;
displaying (808) the *n* frames on the display at the frame rate, wherein content of each frame in the n frames is based upon a respective position in the positions.

8. The method (800) of claim 7, wherein displaying (808) the *n* frames on the display at the frame rate comprises displaying a trace of the member over the display, wherein the trace, from a perspective of a user, is depicted in real-time on the display.

9. The method (800) of claim 7, further comprising:
receiving computed coordinates of the member on the display, the computed coordinates based upon the sensor data; and
predicting the positions of the member on the display for the *n* frames based upon the computed coordinates of the member on the display.

10. The method (800) of claim 9, wherein predicting the positions comprises:
estimating a trajectory and velocity of the member with respect to a first frame based upon the sensor data from the sensor; and
estimating a position of the member for at least one frame in the *n* frames based upon the trajectory and the velocity of the member.

11. The computing apparatus (300) of claim 1, the predictor component (320) configured to predict the positions of the member based upon the member being a stylus rather than a finger.

12. The computing apparatus (300) of claim 1, the predictor component (320) configured to predict the positions of the member based upon the member being a finger rather than a stylus.

13. The computing apparatus (300) of claim 1, wherein the predictor component (320) is configured to predict the positions based upon previously detected positions of the member relative to the display in a trace.

## Patentansprüche

1. Datenverarbeitungsvorrichtung (300), umfassend:
eine Prädiktorkomponente (320), die konfiguriert ist, Positionen eines Elements in Bezug auf eine Anzeige für eine entsprechende Vielzahl von Anzeigeframes, die angezeigt werden sollen, vorherzusagen, wobei die Prädiktorkomponente (320) konfiguriert ist, die Positionen des Elements basierend auf Samples eines Sensorsignals und einem Wert vorherzusagen, der eine Reibungskraft zwischen dem Element und einer Oberfläche der Anzeige anzeigt; und
eine Betriebskomponente (324), die konfiguriert ist, zu bewirken, dass die Vielzahl von Anzeigeframes auf der Anzeige basierend auf den Positionen des Elements, die von der Prädiktorkomponente (320) vorhergesagt werden, angezeigt wird.

2. Datenverarbeitungsvorrichtung (300) nach Anspruch 1, weiterhin umfassend eine Berührungssteuerung, die konfiguriert ist, eine Position des Elements relativ zu der Anzeige basierend auf mindestens einem Sample des Sensorsignals zu berechnen, wobei die Prädiktorkomponente (320) konfiguriert ist, die Positionen des Elements basierend auf der von der Berührungssteuerung berechneten Position vorherzusagen.

3. Datenverarbeitungsvorrichtung (300) nach Anspruch 1, weiterhin umfassend einen Speicher, der ein Widerstandsmodell umfasst, wobei das Widerstandsmodell konfiguriert ist, die Reibungskraft zwischen dem Element und der Oberfläche der Anzeige zu modellieren, wobei die Prädiktorkomponente (320) konfiguriert ist, den Wert zu berechnen, der die Reibungskraft basierend auf dem Widerstandsmodell anzeigt.

4. Datenverarbeitungsvorrichtung (300) nach Anspruch 1, wobei die Betriebskomponente konfiguriert ist, zu bewirken, dass die Frames so angezeigt werden, dass ein Benutzer der Datenverarbeitungsvorrichtung wahrnimmt, dass die Position des Elements in Echtzeit erfasst wird.

5. Datenverarbeitungsvorrichtung (300) nach Anspruch 1, wobei die Prädiktorkomponente (320) konfiguriert ist, die Positionen des Elements relativ zur Anzeige für die jeweilige Vielzahl von Anzeigeframes basierend auf Positionen des Elements relativ zur Anzeige für zuvor angezeigte Anzeigeframes, eine geschätzte Geschwindigkeit des Elements beim Bewegen des Elements über die Anzeige und eine geschätzte Reibungskraft zwischen dem Element und der Anzeige beim Bewegen des Elements über die Anzeige vorherzusagen.

6. Datenverarbeitungsvorrichtung (300) nach Anspruch 1, wobei die Prädiktorkomponente (320) konfiguriert ist, die Positionen basierend auf mindestens einem aus:
einer Position des Elements in Bezug auf einen Rand der Anzeige; oder
einer Identität einer Anwendung, die von der Datenverarbeitungsvorrichtung ausgeführt wird.

7. Verfahren (800) umfassend:
Empfangen (804) von Sensordaten von einem Sensor, wobei die Sensordaten die Position eines Elements auf einer Anzeige anzeigen, wobei das Element in Kontakt mit der Anzeige steht;
als Reaktion auf das Empfangen der Sensordaten Vorhersagen (806) von Positionen des Elements auf der Anzeige für *n* Frames, die auf der Anzeige mit einer Framerate angezeigt werden sollen, wobei *n* eine ganze Zahl größer als Null und kleiner als hundert ist, wobei die Positionen des Elements basierend auf den Sensordaten vorhergesagt werden; und
für mindestens ein Frame in den *n* Frames, Schätzen einer Reibungskraft zwischen dem Element und der Anzeige; und
Vorhersagen einer Position des Elements für mindestens ein anderes Frame in den *n* Frames basierend auf der zwischen dem Element und der Anzeige geschätzten Reibungskraft;
Anzeigen (808) der *n* Frames auf der Anzeige mit der Framerate, wobei der Inhalt jedes Frames in den *n* Frames auf einer jeweiligen Position in den Positionen basiert.

8. Verfahren (800) nach Anspruch 7, wobei das Anzeigen (808) der *n* Frames auf der Anzeige mit der Framerate das Anzeigen einer Spur des Elements über die Anzeige umfasst, wobei die Spur aus der Perspektive eines Benutzers in Echtzeit auf der Anzeige dargestellt wird.

9. Verfahren (800) nach Anspruch 7, weiterhin umfassend:
Empfangen von berechneten Koordinaten des Elements auf der Anzeige, wobei die berechneten Koordinaten auf den Sensordaten basieren; und
Vorhersagen der Positionen des Elements auf der Anzeige für die *n* Frames basierend auf den berechneten Koordinaten des Elements auf der Anzeige.

10. Verfahren (800) nach Anspruch 9, wobei das Vorhersagen der Positionen umfasst:
Schätzen einer Trajektorie und Geschwindigkeit des Elements in Bezug auf ein erstes Frame basierend auf den Sensordaten von dem Sensor; und
Schätzen einer Position des Elements für mindestens ein Frame in den n Frames basierend auf der Trajektorie und der Geschwindigkeit des Elements.

11. Datenverarbeitungsvorrichtung (300) nach Anspruch 1, wobei die Prädiktorkomponente (320) konfiguriert ist, die Positionen des Elements vorherzusagen, basierend darauf, dass das Element ein Eingabestift und kein Finger ist.

12. Datenverarbeitungsvorrichtung (300) nach Anspruch 1, wobei die Prädiktorkomponente (320) konfiguriert ist, die Positionen des Elements vorherzusagen, basierend darauf, dass das Element ein Finger und kein Eingabestift ist.

13. Datenverarbeitungsvorrichtung (300) nach Anspruch 1, wobei die Prädiktorkomponente (320) konfiguriert ist, die Positionen basierend auf zuvor erfassten Positionen des Elements in Bezug auf die Anzeige in einer Spur vorherzusagen.

## Revendications

1. Appareil de calcul (300) comprenant :
un composant prédicteur (320) qui est configuré pour prédire des positions d'un élément par rapport à un affichage pour une pluralité respective de trames d'affichage qui doivent être affichées, le composant prédicteur (320) configuré pour prédire les positions de l'élément sur la base d'échantillons d'un signal de capteur et d'une valeur qui indique une force de friction entre l'élément et une surface de l'affichage ; et
un composant fonctionnel (324) qui est configuré pour amener la pluralité de trames d'affichage à être affichées sur l'affichage sur la base des positions de l'élément prédites par le composant prédicteur (320).

2. Appareil de calcul (300) selon la revendication 1, comprenant en outre un contrôleur tactile qui est configuré pour calculer une position de l'élément par rapport à l'affichage sur la base d'au moins un échantillon du signal de capteur, le composant prédicteur (320) configuré pour prédire les positions de l'élément sur la base de la position calculée par le contrôleur tactile.

3. Appareil de calcul (300) selon la revendication 1, comprenant en outre une mémoire qui comprend un modèle de résistance, le modèle de résistance configuré pour modéliser la force de friction entre l'élément et la surface de l'affichage, le composant prédicteur (320) configuré pour calculer la valeur qui indique la force de friction sur la base du modèle de résistance.

4. Appareil de calcul (300) selon la revendication 1, dans lequel le composant fonctionnel est configuré pour amener les trames à être affichées de sorte qu'un utilisateur de l'appareil de calcul perçoive qu'une position de l'élément est détectée en temps réel.

5. Appareil de calcul (300) selon la revendication 1, dans lequel le composant prédicteur (320) est configuré pour prédire les positions de l'élément par rapport à l'affichage pour la pluralité respective de trames d'affichage sur la base de positions de l'élément par rapport à l'affichage pour des trames d'affichage précédemment affichées, d'une vélocité estimée de l'élément lorsque l'élément se déplace sur l'affichage, et d'une force de friction estimée entre l'élément et l'affichage lorsque l'élément se déplace sur l'affichage.

6. Appareil de calcul (300) selon la revendication 1, dans lequel le composant prédicteur (320) est configuré pour prédire les positions sur la base d'au moins une parmi :
une position de l'élément par rapport à un bord de l'affichage ; ou
une identité d'une application exécutée par l'appareil de calcul.

7. Procédé (800) comprenant:
la réception (804) de données de capteur depuis un capteur, les données de capteur indiquant une position d'un élément sur un affichage, l'élément étant en contact avec l'affichage ;
en réponse à la réception des données de capteur, la prédiction (806) de positions de l'élément sur l'affichage pour n trames qui doivent être affichées sur l'affichage à une vitesse de trame, n étant un nombre entier supérieur à zéro et inférieur à cent, les positions de l'élément prédites sur la base des données de capteur ; et
pour au moins une trame dans les n trames, l'estimation d'une force de friction entre l'élément et l'affichage ; et
la prédiction d'une position de l'élément pour au moins une autre trame dans les n trames sur la base de la force de friction estimée entre l'élément et l'affichage ;
l'affichage (808) des n trames sur l'affichage à la vitesse de trame, dans lequel un contenu de chaque trame dans les n trames est basé sur une position respective dans les positions.

8. Procédé (800) selon la revendication 7, dans lequel l'affichage (808) des n trames sur l'affichage à la vitesse de trame comprend l'affichage d'une trace de l'élément sur l'affichage, dans lequel la trace, depuis une perspective d'un utilisateur, est représentée en temps réel sur l'affichage.

9. Procédé (800) selon la revendication 7, comprenant en outre :
la réception de coordonnées calculées de l'élément sur l'affichage, les coordonnées calculées basées sur les données de capteur ; et
la prédiction des positions de l'élément sur l'affichage pour les n trames sur la base des coordonnées calculées de l'élément sur l'affichage.

10. Procédé (800) selon la revendication 9, dans lequel la prédiction des positions comprend :
l'estimation d'une trajectoire et d'une vélocité de l'élément par rapport à une première trame sur la base des données de capteur provenant du capteur ; et
l'estimation d'une position de l'élément pour au moins une trame dans les *n* trames sur la base de la trajectoire et de la vélocité de l'élément.

11. Appareil de calcul (300) selon la revendication 1, le composant prédicteur (320) configuré pour prédire les positions de l'élément sur la base du fait que l'élément soit un stylet plutôt qu'un doigt.

12. Appareil de calcul (300) selon la revendication 1, le composant prédicteur (320) configuré pour prédire les positions de l'élément sur la base du fait que l'élément soit un doigt plutôt qu'un stylet.

13. Appareil de calcul (300) selon la revendication 1, dans lequel le composant prédicteur (320) est configuré pour prédire les positions sur la base de positions précédemment détectées de l'élément par rapport à l'affichage dans une trace.
